# FASCICULE DE BREVET EUROPEEN

(11) **EP 0 976 605 B1**
(45) Date de publication et mention de la délivrance du brevet: **20.10.2004**
(21) Numéro de dépôt: 99420176.2
(22) Date de dépôt: 30.07.1999
(51) Int. Cl.: B60N 2/00, B60N 2/02

(54) **Siège pour véhicule, amovible, retournable et réglable longitudinalement par commandes sur ses glissières**
Kraftfahrzeugsitz, herausnehmbar, umwendbar und längsverstellbar durch Stelleinheiten auf dessen Gleitschienen
Vehicle seat, removable, reversible and longitudinally adjustable by actuators on its slides

(30) Priorité: 31.07.1998 FR 9810102
(43) Date de publication de la demande: 02.02.2000
(73) Titulaire: Grupo Antolin-Ingenieria, S.A., 09080 Burgos (ES)
(72) Inventeur: Chabanne, Jean-Pierre, 89710 Champvallon (FR); Duchateau, Jean, 43330 Pont Salomon (FR)
(74) Mandataire: Maureau, Philippe

(56) Documents cités:
- EP-A- 0 615 879
- DE-A- 19 729 581
- FR-A- 2 700 735
- GB-A- 2 219 493
- US-A- 4 277 043

## Description

L'invention concerne un siège de véhicule, amovible, retournable et réglable longitudinalement par rapport à deux glissières fixées au plancher du véhicule.

Ce type de siège est, par exemple, utilisé dans les véhicules dont l'habitacle peut être transformé pour être adapté au nombre de personnes à transporter, en modifiant le nombre de sièges et/ou l'intervalle entre les sièges, ou pour augmenter la surface réservée aux bagages ou au fret en enlevant certains sièges. Il en est ainsi par exemple dans les véhicules dénommés monospace, où certains sièges peuvent être retournés.

Elle concerne plus spécialement les sièges comprenant quatre pieds munis chacun de verrous, à verrouillage par ressort et déverrouillage manuel, aptes à coopérer avec des moyens d'ancrage complémentaires portés par des coulisseaux mobiles longitudinalement dans les glissières, mais équipés de moyens de blocage, déblocables manuellement.

La demande de brevet français FR-A-2 700 735 décrit un siège de ce type dans lequel les moyens de commande de déverrouillage des pieds et les moyens de commande de déblocage des coulisseaux sont disposés sous l'assise du siège. Cet agencement, qui réunit sur le siège tous les moyens de commande de ses fonctionnalités, présente l'inconvénient d'alourdir ce siège et d'en augmenter le coût, mais aussi de faciliter, pour un passager inattentif, la confusion entre la commande de réglage longitudinal et la commande de verrouillage des pieds, avec le risque de désolidarisation du siège de ses glissières à un moment où le véhicule freine.

La présente invention a pour objet de remédier à ces inconvénients en fournissant un siège du type de celui selon FR-A-2 700 735 dans lequel la commande de déblocage des coulisseaux est sur les glissières.

A cet effet, dans le siège selon l'invention, les moyens de déblocage manuel de chacun des coulisseaux comprennent :
- une manette de commande manuelle articulée sur l'une des extrémités de chaque coulisseau, près de la zone d'ancrage d'un pied, cette extrémité étant différente sur les deux coulisseaux pour un même siège,
- et un renvoi transversal articulé près des pieds avant, sous l'assise du siège et dont une extrémité est apte à coopérer avec la manette de commande de déblocage de l'un des coulisseaux, tandis que l'autre extrémité de ce verrou porte un doigt apte à coopérer avec les moyens de déblocage de l'autre coulisseau dans sa glissière.

Ainsi, que le siège soit mis en place face à l'avant ou face à l'arrière du véhicule, le passager dispose toujours, près de l'un des pieds avant du siège, d'une manette de déblocage disposée hors du siège et dont l'actionnement entraîne, par le renvoi porté par le siège, le fonctionnement des moyens de déblocage des deux coulisseaux.

L'invention prévoit aussi dans une forme d'éxécution des moyens permettant, lorsque les glissières ne sont pas utilisées, d'éclipser les manettes pour éviter qu'elles forment des saillies pouvant être accrochées et détérioriées ou pouvant gênées le chargement du plancher libéré des sièges, et, lorsqu'un siège est mis en place, d'amener la seule manette utile en position d'utilisation.

Dans une forme d'exécution de l'invention, chaque manette de commande est montée libre en rotation sur un axe transversal du coulisseau, est soumise en permanence à l'action d'un ressort de torsion tendant à la rabattre contre la partie centrale du coulisseau et dans la glissière, et est liée en rotation, avec possibilité de déplacement angulaire relatif sur la course de commande de déblocage, à un disque cranté, dont le cran est apte, en fin de redressement manuel de la manette, à coopérer avec un doigt de verrouillage, ledit doigt étant relié à des moyens aptes à l'éclipser lors du dégagement du siège hors du coulisseau.

Dans ce cas, le redressement de la manette s'effectue manuellement après mise en place du siège et son rabattement est automatique.

Dans une autre forme d'exécution, chaque manette de commande est montée libre en rotation sur un axe transversal du coulisseau et est soumise en permanence à l'action d'un ressort de torsion, tendant à la rabattre sur l'extrémité du coulisseau et dans la glissière, tandis que le pied avant du siège venant dans la zone d'ancrage juxtaposée à la manette comporte un éperon latéral apte, en fin d'engagement, à venir en appui sur l'extrémité active de la manette pour amener cette manette en position d'utilisation, avec son extrémité libre en saillie au-dessus de la glissière.

Le redressement de la manette s'effectue lors de la mise en place du siège, par le siège lui-même, et son rabattement est également automatique.

D'autres caractéristiques et avantages ressortiront de la description qui suit en référence au dessin schématique annexé représentant, à titre d'exemples, deux formes d'exécution du dispositif selon l'invention.
Figure 1 est une vue partielle en perspective d'une première forme d'exécution du dispositif de fixation du siège sur les coulisseaux de deux glissières,
Figure 2 est une vue en perspective éclatée montrant les différents éléments du coulisseau et de la glissière,
Figure 3 est une vue partielle en perspective avec coupe partielle montrant les éléments de figure 2, lorsqu'ils sont assemblés et en position de blocage, la manette de commande étant en position escamotée,
Figure 4 est une vue partielle en coupe longitudinale du mécanisme dans la position de figure 3,
Figures 5 à 9 sont des vues en coupe transversale suivant V-V, VI-VI, VII-VII, VIII-VIII et IX-IX de figure 4,
Figure 10 est une vue en coupe longitudinale de la glissière avec le siège en fin d'engagement du siège,
Figures 11, 12 et 13 sont des vues partielles, à échelle agrandie montrant le mécanisme de blocage de la manette de commande, respectivement sans le siège, lors de l'engagement d'un pied de siège, et en fin d'engagement,
Figure 14 est une vue partielle du mécanisme au début du dégagement du siège,
Figure 15 est une vue partielle montrant, à échelle agrandie, le mécanisme de figure 14,
Figure 16 est une vue partielle montrant, à échelle agrandie, la phase suivante de dégagement du siège,
Figure 17 est une vue en coupe longitudinale d'une autre forme d'exécution du mécanisme,
Figures 18 et 19 sont des vues en coupe transversale, et à échelle agrandie, suivant respectivement XVIII-XVIII, et XIX-XIX de figure 17.

Dans ce dessin, la référence numérique 2 désigne, de manière générale, un siège dont l'assise est munie de deux pieds avant 3d, 3g et de deux pieds arrière 4d et 4g. Chaque pied est associé à des verrous aptes à coopérer avec des moyens d'ancrage portés par un coulisseau 5, déplaçable dans une glissière 6.

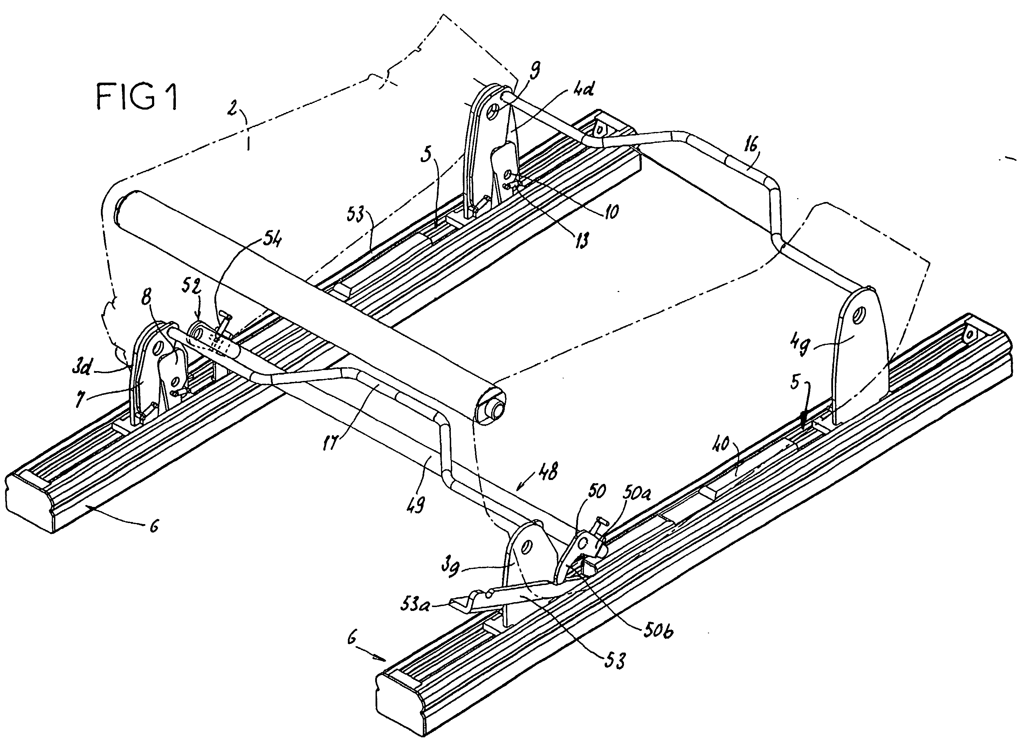

Dans la forme d'exécution représentée aux figures 1 à 16, chaque pied comporte deux verrous 7 et 8, articulés par des axes transversaux 9 et 10 sur le pied correspondant et rappelés en position de verrouillage par des ressorts 12 et 13, visibles figure 1.

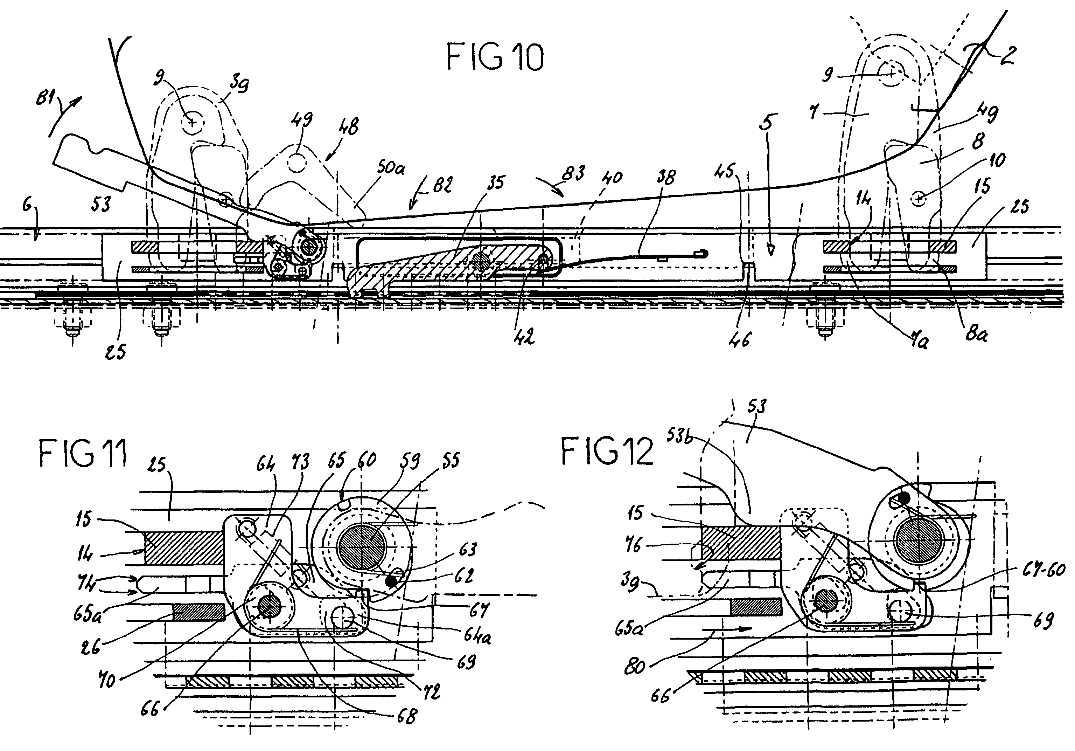

Comme montré sur la partie droite de la figure 10, ces verrous 7 et 8 sont munis à leur extrémité libre de crochets 7a, 8a, disposés dos à dos et aptes à s'accrocher sous le bord d'une ouverture 14 ménagée dans une platine 15 portée par un coulisseau 5. De façon connue, les verrous 7 des deux pieds arrière, de même que les verrous 7 des deux pieds avant, sont reliés par une tige de commande d'ouverture, respectivement 16 et 17 (figure 1).

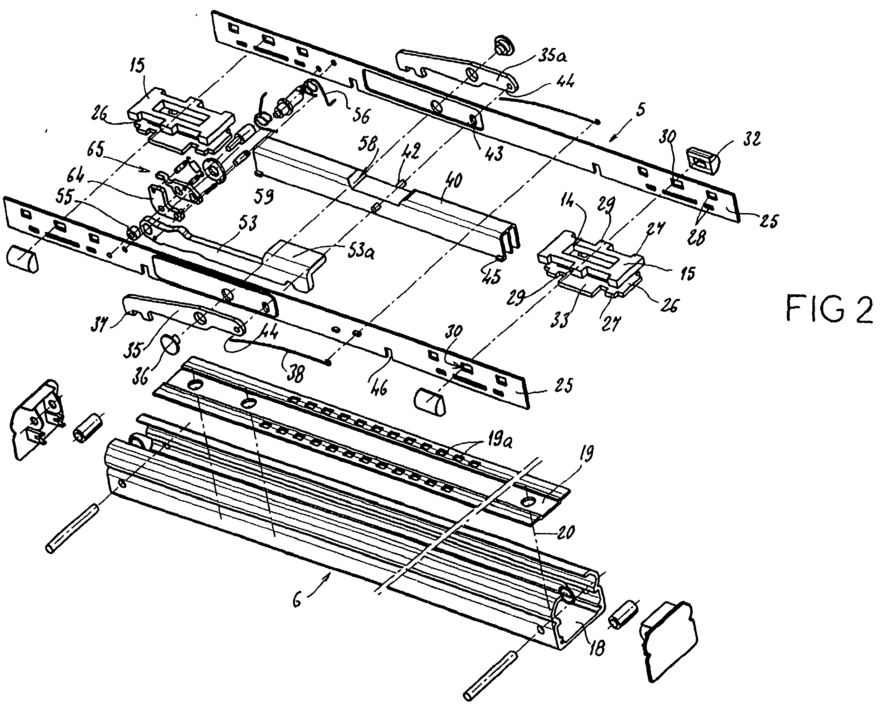

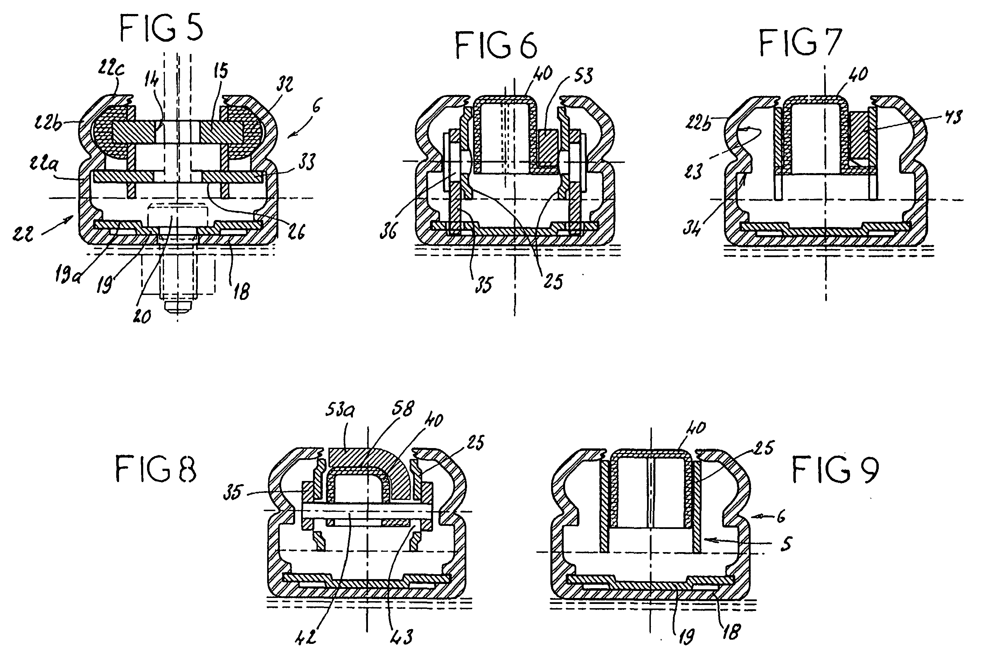

Comme montré aux figures 2 et 5 à 9, chaque glissière 6 est constituée par un profilé métallique, par exemple en aluminium, présentant, en section transversale, la forme générale d'un U et comportant une âme 18, plane et horizontale, apte à venir en appui sur le plancher d'un véhicule et à recevoir sur sa face interne une platine en acier 19 dont les deux ailes 19a sont conformées en crémaillère. La liaison de la glissière avec le plancher est assurée par des vis 20 traversant son âme 18 et le profilé 19, comme montré figure 5. Les deux ailes 22 de la glissière comportent une partie droite 22a, et une partie supérieure 22b arrondie et formant une gorge interne 23 de section transversale en V à fond curviligne. La partie 22b est prolongée par un retour 22c, tourné vers l'intérieur.

Comme montré figure 2, le coulisseau 5 est composé de deux joues longitudinales 25 qui sont reliées l'une à l'autre par l'intermédiaire des platines 15 et de pièces de liaison 26. Plus précisément, chaque platine 15 et pièces 26 comportent des tenons 27 qui, après avoir traversés des découpes 28 ménagées dans les joues correspondantes, sont rivés contre ces joues. Chaque platine 15 comporte, dans sa partie centrale et de chaque côté, un tenon latéral 29 qui, après avoir traversé une découpe 30 de la platine, reçoit un patin 32. Comme montré figure 5, chaque patin de section transversale semi circulaire est apte à coulisser dans la rainure 23 de la glissière. Cette même figure montre que la pièce de liaison 26 prend appui par deux tenons latéraux 33 sous des redans 34 du profilé constituant la glissière 6 pour assurer le calage en translation verticale du coulisseau par rapport à cette glissière.

Le coulisseau 5 porte des moyens de blocage par rapport à la glissière, moyens qui dans la forme d'exécution représentée, sont constitués par deux leviers 35 disposés à l'extérieur des joues 25 du coulisseau et articulés chacun sur un pion transversal 36, porté par la joue correspondante. Chaque levier 35 est muni à l'une de ses extrémités de crans 37 aptes à coopérer avec la crémaillère 19a correspondante. A son autre extrémité 35a, chaque levier 35 est soumis à l'action d'un ressort de rappel 38 tendant à engager ses crans dans la crémaillère.

Les moyens de déblocage de ces leviers comprennent des moyens disposés dans le coulisseau, des moyens de renvoi entre les deux coulisseaux et des moyens de commande manuelle portés par chacun des coulisseaux.

Dans cette forme d'exécution, les moyens de commande portés par chaque coulisseau sont constitués par une bascule 40 disposée entre les zones d'ancrage des pieds et portant, à sensiblement mi longueur, un axe transversal 42 monté coulissant verticalement dans des lumières oblongues verticales 43 des joues 25. Les extrémités de l'axe 42 se prolongent au-delà des joues 25 pour pénétrer dans des alésages 44 ménagés aux extrémités non crantées des leviers 35. A chacune des extrémités libres et de chaque côté, la bascule 40 comporte des moyens limitant ses déplacements verticaux et, par exemple, des ergots 45 saillant latéralement vers l'extérieur et coulissant verticalement dans des encoches 46 ménagées dans les joues et débouchant vers le bas. Chacune des bascules 40 des coulisseaux des deux glissières associées à un même siège est commandée simultanément à l'autre bascule grâce à un renvoi 48 disposé transversalement sous le siège. Dans cette forme d'exécution et comme montré à la figure 1, le renvoi est constitué par un axe tubulaire 49 monté libre en rotation sous le siège et dont l'une des extrémités, par exemple son extrémité gauche est muni d'un levier coudé 50, tandis que l'autre extrémité est solidaire d'un doigt de commande 52. Le levier coudé 50 comporte une branche 50a, correspondant au doigt 52 et apte à venir en appui sur l'extrémité correspondante de la bascule 40 sous-jacente, et une branche 50b apte à coopérer avec une manette de commande manuelle 53. Des ressorts de traction 54 (figure 1), interposés entre le châssis du siège, et respectivement le doigt 50a et le doigt 54, communiquent en permanence au renvoi 48 un couple de rappel amenant la branche 50b du levier coudé contre la manette 53.

Comme le montrent les figures 2 à 4, la manette 53 de chaque coulisseau est montée libre en rotation sur un axe 55. Dans le coulisseau 5 circulant dans la glissière qui est à gauche, par rapport à un siège tourné face à la route, cet axe est sur l'extrémité avant du coulisseau, tandis que, sur le coulisseau circulant dans la glissière de droite, cet axe est à l'extrémité arrière du coulisseau.

La manette 53 est associée à un ressort de torsion 56 qui la sollicite en permanence dans le sens de la flèche 57, c'est-à-dire qui tend à la rabattre sur le coulisseau, et de manière que sa poignée de préhension 53a soit sensiblement dans la partie centrale de ce coulisseau où elle s'encastre dans un décrochement 58 de la bascule. La manette est liée en rotation à un disque 59 comportant un cran 60. Le disque 59 est monté libre en rotation sur l'axe 55 de la manette 53 mais est lié en rotation à elle avec possibilité de déplacement angulaire relatif limité par un tenon transversal 62 saillant latéralement de la manette et pénétrant dans une lumière circulaire oblongue 63 ménagée dans ce disque.

Les moyens de blocage de la manette en position d'utilisation comprennent un levier coudé 64 et une platine de commande 65 disposée entre l'articulation de la manette de commande et la zone d'ancrage du pied correspondant, c'est-à-dire la platine 15. Comme montré plus en détails à la figure 11, le levier 64, qui est articulé près de son coude sur un axe 66, comporte, à l'extrémité de sa branche sensiblement horizontale 64a, un doigt de verrouillage 67 saillant vers le haut et apte à pénétrer dans le cran 60 du disque 59, sous l'action d'un ressort de torsion 68.

La branche horizontale 64a porte également un tenon transversal 69 saillant en direction de la platine de commande 65. Cette platine de commande est traversée par un évidement 70 entourant l'axe 66 et par un évidement 72 entourant le tenon 69 précité. Grâce à cela, la platine présente une possibilité de mouvement relatif limité par rapport au levier 64, tant en rotation qu'en translation transversale. Un ressort de traction 73 est interposé entre la platine 65 et la branche sensiblement verticale du levier 64. Enfin, cette platine comporte un doigt détecteur 65a qui s'étend au-dessous de la platine d'ancrage 15 et de manière que, en l'absence d'un pied de siège, son extrémité, munie de biseaux 74 sur ses bords, respectivement supérieur et inférieur, soit au-dessous de l'ouverture 14 de la platine 15 et dans la trajectoire d'engagement du pied du siège correspondant.

Enfin, et suivant une autre caractéristique importante de l'invention, l'un des pieds du siège et en l'occurrence le pied avant gauche 3g, comporte une gorge 76, visible figures 12 à 16, apte à coopérer avec le doigt détecteur 65a.

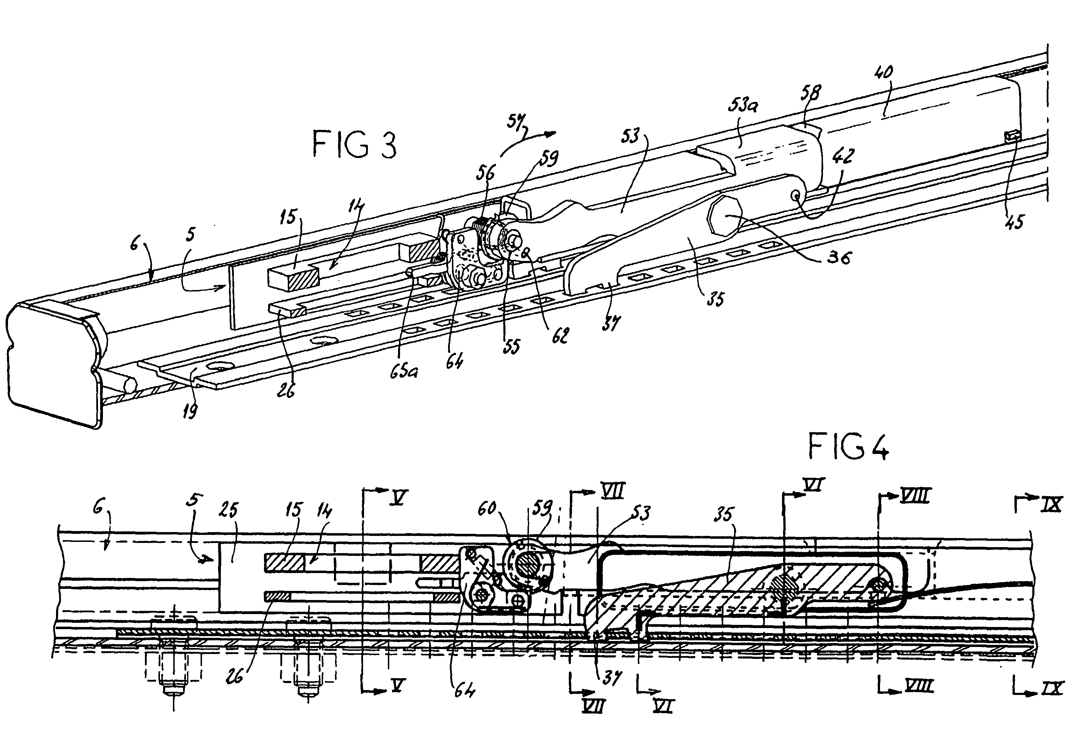

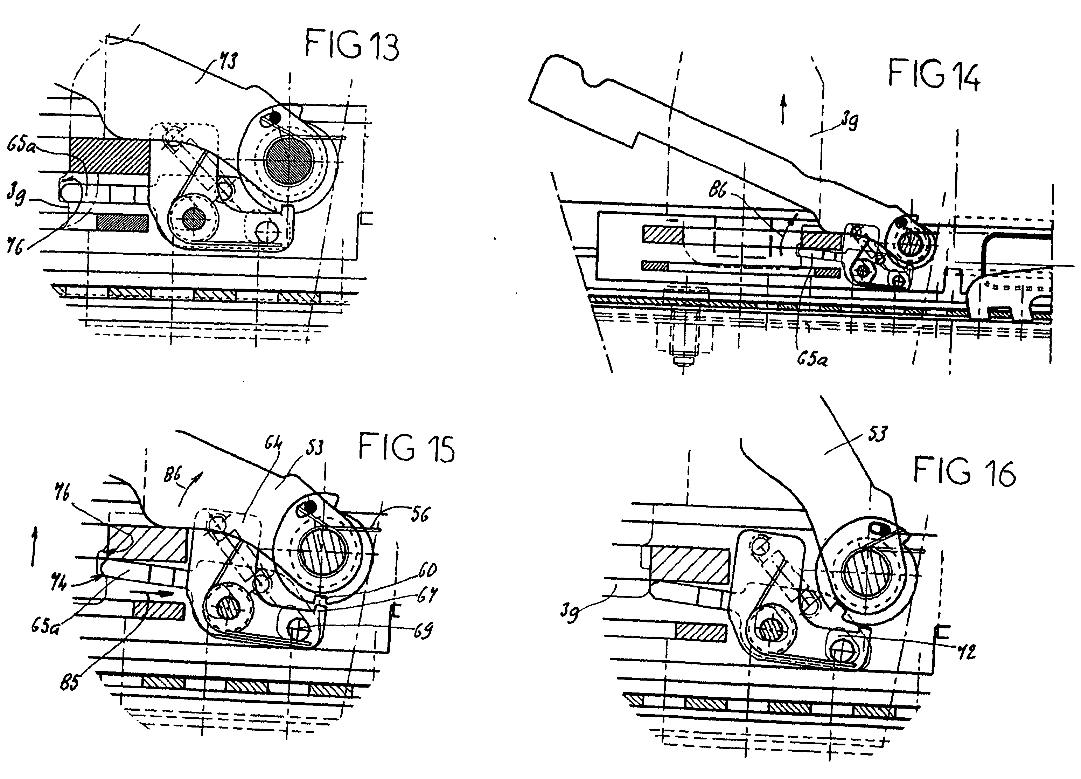

Avec cet agencement, en l'absence de siège, les deux glissières ne forment aucun obstacle puisque, dans chacune d'elles, la manette de commande 53 est en position rabattue sur le coulisseau 5, et à l'intérieur de la glissière 6, comme montré aux figures 3, 4 et 8. Avant d'amener le siège sur les glissières, l'opérateur doit amener en position d'utilisation la manette qui coopérera avec le pied avant gauche du siège, à savoir la manette de la glissière de gauche, si le siège doit être mis en position normale, et la manette de la glissière de droite, si le siège doit être mis en position retournée. Cette manoeuvre de redressement s'effectue en faisant pivoter la manette 53, dans le sens inverse de la flèche 57 de la figure 3, jusqu'à ce que le cran 60 du disque 59 vienne s'engager sur le doigt de verrouillage 67. Dans cette position, et comme montré par exemple à la figure 12, la manette 53 est en appui par une protubérance 53b sur la platine d'ancrage 15 et fait saillie vers le haut, tout en étant sur le côté de l'ouverture 14, ménagée dans cette platine. Lors de l'introduction des pieds avant du siège dans leurs platines d'ancrage, le bord inférieur du pied avant gauche 3g rencontre l'extrémité du doigt détecteur 65a et fait reculer ce doigt dans le sens de la flèche 80 de figure 12. Il en résulte que l'ensemble de la platine 65 se déplace, aidée en cela par ses évidements 70 et 72 qui permettent ce déplacement par rapport, respectivement, à l'axe 66 et au tenon 69. Comme montré à la figure 13, dès que la gorge 76 du pied 3g vient au niveau de l'extrémité du doigt détecteur 65a, celle-ci pénètre dans cette gorge sous l'action du ressort 73 et reste dans cette position tant que le siège est sur les glissières.

Lorsque le siège est dans cette position, et comme montré à la figure 10, pour régler longitudinalement la position du siège par rapport aux glissières 6, il faut faire pivoter la manette 53 dans le sens de la flèche 81. On notera que, grâce à la lumière 63 ménagée dans le disque 59, ce pivotement est sans effet sur le disque cranté 59 qui peut ainsi continuer à maintenir la manette en position d'utilisation. Le renvoi du pivotement de la manette 53 provoque, par la branche 50b du levier 50, le pivotement de ce levier 50 et, par le renvoi 48, le pivotement du doigt 54 disposé de l'autre côté. Il en résulte que les deux bascules 40 sont soumises à un pivotement dans le sens de la flèche 82, par rapport à leurs ergots 45 qui, disposés à leurs autres extrémités, sont en appui contre le fond des encoches 46 des joues 25 du coulisseau. Par l'axe 42, ce basculement se transmet aux deux leviers crantés 35 de chaque bascule et ceux-ci pivotent alors dans le sens de la flèche 83 de figure 10, en dégageant leurs crans 37 de la crémaillère correspondante. Après réglage de la position longitudinale du siège, donc des coulisseaux, l'opérateur relâche la manette 53, ce qui permet aux ressorts 38 de ramener les leviers crantés 35 en position de blocage du coulisseau et de ramener les bascules en position de repos, les ressorts 54 ramenant le renvoi 48 dans sa position de départ.

Il est à noter que, de par sa position sur l'une des glissières, la manette 53 qui commande le déplacement longitudinal, ne peut pas être confondu avec la manette 17 de commande de déverrouillage des pieds avant. De plus, avec cette configuration et excepté le renvoi 48 qui est très léger et très simple, le siège est débarrassé de tout mécanisme de commande de déblocage des coulisseaux et de toute poignée de commande pouvant être détériorée par des manipulations du siège, hors du véhicule.

Lorsque le siège est extrait des coulisseaux, le dégagement du pied avant gauche 3g provoque d'abord, comme montré aux figures 14 et 15, le pivotement vers le haut (flèche 86) du doigt détecteur 65a. Ensuite et dès que le bord inférieur de la gorge 76 ménagée dans le pied avant gauche 3g rencontre le biseau inférieur 74 du doigt 65a, il chasse vers l'arrière et dans le sens de la flèche 85, ce doigt 65a et l'ensemble de la platine 65, comme montré à la figure 15. Le basculement de la platine 65 dans le sens des flèches 86 se répercute, par son tenon 69, sur le levier coudé 64 dont le doigt 67 se dégage du cran 60 du disque 59 lié en rotation à la manette 53. Il en résulte que, comme montré à la figure 15, la manette 53 est libérée et peut, sous l'action de son ressort de torsion 56, se rabattre contre le coulisseau, comme montré figure 16, pour dégager le plancher du véhicule de toute aspérité. La figure 16 montre que ce mouvement de dégagement du doigt 67 n'influe pas sur les mouvements de la platine de détection 65, et cela grâce aux évidements 70 et 72 ménagés dans cette platine.

Il est évident que, lorsque le siège est retourné, la manette disposée sur l'extrémité arrière du coulisseau de la glissière de droite se rabat de la même façon, puisqu'elle est verrouillée par les mêmes éléments qui réagissent de la même façon à l'introduction et à l'extraction du pied avant gauche du siège.

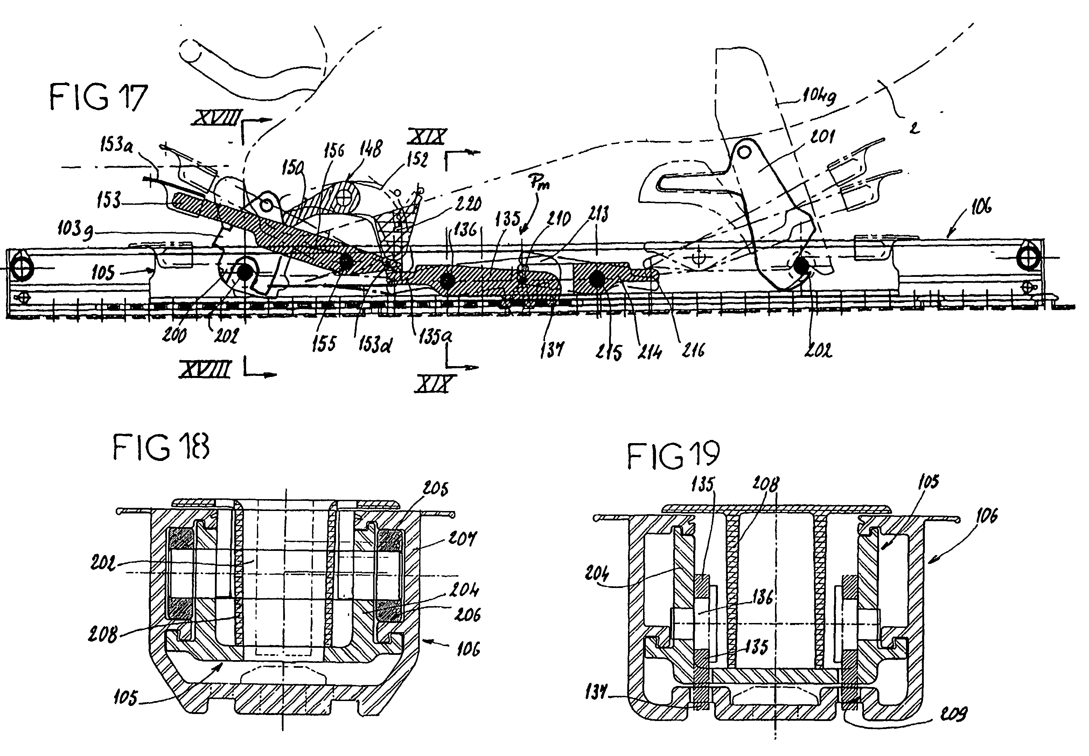

La forme d'exécution représentée aux figures 17 à 19 se différencie de la précédente par les moyens de verrouillage des pieds, par les moyens de rappel en position d'utilisation des manettes de commande et par les moyens de commande des leviers crantés assurant le blocage des coulisseaux par rapport aux glissières.

Dans ce qui suit, les pièces qui ont des formes différentes, mais assurent la même fonction que celles de la première forme d'exécution, porteront les mêmes références majorées de 100, et les pièces nouvelles seront référencées à partir de 200.

Les pieds avant 103g, 103d et les pieds arrière 104g sont équipés de verrous, respectivement 200 et 201 qui enfourchent chacun une tige 202 disposée dans un puits du coulisseau. Ce type de verrous est bien connu et, par exemple, est décrit dans le brevet français FR-A- 2 556 946. La figure 18 montre que, dans ces conditions, chaque tige 202 est constituée par un axe traversant les ailes 204 du profilé en U constituant le corps du coulisseau 105. Cet axe porte, à chacune de ses extrémités, un galet 205 circulant dans une rainure longitudinale 206 ménagée dans la partie intérieure des ailes 207 du profilé constituant la glissière 106. Le puits d'ancrage est constitué par une pièce en matière synthétique 208. La figure 19 montre que chaque coulisseau 105 porte deux leviers crantés 135, articulés sur des pivots 136 et coopérant avec une crémaillère 209, réalisée par perforation du fond du profilé constituant la glissière 106. La figure 17 qui représente, en coupe longitudinale, le coulisseau de la glissière de gauche, montre que les deux leviers 135 sont orientés avec leurs crans 137 tournés vers l'arrière et leurs parties non crantées 135a venant au-dessous de la partie active 153d de la manette de commande 153. Cette manette de commande est articulée sur un axe 155 et est constamment rappelée par un ressort de torsion 156, de manière que sa poignée de préhension 153a soit rabattue sur l'extrémité avant du coulisseau. Les deux leviers crantés 135 sont reliés, dans leurs parties crantées, par un axe transversal 210 qui est sensiblement disposé dans le plan médian Pm transversal du coulisseau 105. Cet axe est enfourché par une fourchette 213 d'un levier complémentaire 214, articulé en 215 sur le coulisseau. L'autre extrémité 216 de ce levier 214 s'étend en direction de la zone d'ancrage des pieds arrière, de manière à former une portée d'appui qui est symétrique à celle formée par la partie non crantée 135a des leviers 135 par rapport au plan médian transversal Pm du coulisseau. Dans le coulisseau de la glissière de droite, cette extrémité 216 du levier complémentaire vient au-dessous de l'extrémité active 153d de la manette de commande 153, comme représenté en traits mixtes à la figure 17.

En d'autres termes, le coulisseau 105 circulant dans la glissière de gauche comporte, en allant de l'avant vers l'arrière, l'axe 202 pour l'ancrage du pied avant 103g, l'axe 155 pour l'articulation de la manette de commande 153, les pivots 136 pour l'articulation des leviers crantés 135, l'axe 215 pour le levier intermédiaire 214 et l'axe 202 pour l'ancrage du pied arrière 4g, tandis que le coulisseau pour la glissière de droite comporte l'axe 202 pour l'ancrage du pied avant 3d, les pivots 136, l'axe 215 pour le levier 214, l'axe 155 pour l'articulation de la manette et l'axe 202 pour l'ancrage du pied arrière 4d.

L'assise du siège porte, sur sa partie avant, un renvoi 148 dont l'extrémité gauche est munie d'un levier 150, apte à coopérer avec la manette de commande 153 et dont l'extrémité droite est munie d'un doigt 152 apte à coopérer avec la portée d'appui 135a des leviers crantés de l'autre coulisseau.

Suivant une forme d'exécution de l'invention, le siège comporte un éperon latéral 220, saillant à l'arrière de son pied avant gauche et apte, lors de l'engagement du siège, à venir en appui sur la partie active 153d de la manette de commande pour faire pivoter cette manette et l'amener dans sa position d'utilisation montrée à la figure 17.

Ainsi, lorsque le siège est en position normale sur les glissières, le réglage de sa position longitudinale s'effectue, en actionnant la manette 153 de la glissière de gauche, par action directe sur l'extrémité 135a des leviers crantés 135 du coulisseau de gauche, et, indirectement par le renvoi 148, sur les leviers crantés 135 du coulisseau de droite. Lorsque le siège est en position retournée, l'actionnement de la manette 153, qui est portée par la glissière de droite (par rapport au sens de circulation), agit indirectement sur les leviers crantés disposés dans le coulisseau de droite au moyen du levier intermédiaire 214. Ce mouvement se transmet par le renvoi 148 au levier intermédiaire 214 disposé dans la glissière de gauche.

Lorsque le siège est retiré, la manette 153 est libérée de l'appui de l'éperon 220 et revient automatiquement en position d'effacement, sous l'action de son ressort de rappel 156.

Il ressort de ce qui précède que, dans chacune des formes d'exécution décrites, l'actionnement des mécanismes de déblocage du coulisseau, s'effectue par l'intermédiaire du renvoi 48 disposé sous le siège au moyen d'une commande disposée sur l'une des glissières, ladite commande s'effaçant après extraction du siège pour ne former aucune protubérance pouvant gêner le chargement du véhicule ou être accrochée par des déplacements dans celui-ci.

## Revendications

1. Siège pour véhicule, amovible, retournable et réglable longitudinalement, par commandes sur ses glissières, comprenant quatre pieds munis chacun de verrous (7, 8, 200, 202) à ressorts et déverrouillables par une commande manuelle, ces verrous étant aptes à coopérer avec des moyens complémentaires (15, 202) portés par des coulisseaux (5, 105) mobiles dans deux glissières parallèles (6, 106) fixées sur le plancher du véhicule, chacun de ces coulisseaux étant muni de moyens de blocage constitués par au moins un levier cranté (135) à déblocage manuel et dont les crans (137) sont engagés, par des moyens à ressorts, dans une crémaillère (19, 209) de la glissière, **caractérisé en ce que** les moyens de déblocage manuel de chacun des coulisseaux (5, 105) comprennent :
- une manette de commande manuelle (53, 153) articulée sur l'une des extrémités de chaque coulisseau (5, 105), près de la zone d'ancrage d'un pied (3g), cette extrémité étant différente sur les deux coulisseaux (5) pour un même siège,
- et un renvoi transversal (48, 148) articulé près des pieds avant sous l'assise du siège (2) et dont une extrémité (50, 150) aménagée pour coopérer avec la manette (53) de commande de déblocage de l'un des coulisseaux, tandis que l'autre extrémité de ce renvoi porte un doigt (52, 152) apte à coopérer avec les moyens de déblocage de l'autre coulisseau (5) dans sa glissière (6).

2. Siège selon la revendication 1, **caractérisé en ce que** chaque manette de commande (53) est montée libre en rotation sur un axe transversal (55) du coulisseau (5), est soumise en permanence à l'action d'un ressort de torsion (56) tendant à la rabattre contre la partie centrale du coulisseau (5) et dans la glissière (6), et est liée en rotation, avec possibilité de déplacement angulaire relatif sur la course de commande de déblocage, à un disque cranté (59), dont le cran (60) est apte, en fin de redressement manuel de la manette, à coopérer avec un doigt de verrouillage (67), ledit doigt étant relié à des moyens (64, 65) aptes à l'éclipser lors du dégagement du siège.

3. Siège selon la revendication 2, **caractérisé en ce que** le doigt de verrouillage eclipsable (67) fait saillie vers le haut de la branche sensiblement horizontale (64) d'un levier coudé (64), articulé près de son coude sur un axe transversal (66) du coulisseau (5) et rappelé par un ressort (68) en position d'engagement de son doigt dans le cran (60) du disque (59), alors que la branche verticale du levier est munie d'un moyen d'accrochage pour l'une des extrémités d'un ressort de traction (73) et que ce levier coudé est juxtaposé à une platine de commande (65) montée à coulissement limité et à pivotement limité par rapport au levier (64), ladite platine portant des moyens d'accrochage pour l'autre extrémité du ressort de traction (73) et comportant, à l'opposé de ces moyens d'accrochage, un doigt détecteur (65a) sécantant la trajectoire d'engagement du pied de siège (3g) correspondant dans les moyens d'ancrage complémentaires (15) du coulisseau, tandis que ledit pied de siège (3g) comporte une gorge (76) apte, lors de son engagement, à recevoir l'extrémité (65a) du doigt détecteur (65) poussé par son ressort et, lors de son dégagement, à coopérer avec le biseau (74) de ce doigt pour le chasser à l'encontre de son ressort et le faire pivoter en entraînant le pivotement du levier coudé (64) dans le sens du déverrouillage de la manette de commande (53).

4. Siège selon la revendication 2, **caractérisé en ce que** le renvoi (48) porté par le siège (2) comporte, à son extrémité destinée à coopérer avec l'une des deux manettes de commande (53) des coulisseaux (5), un levier coudé dont l'une des branches (50b) reçoit l'appui de la manette (53) et dont l'autre branche (50a) coopère avec l'une des extrémités d'une bascule (40) de commande de déblocable du coulisseau (5), ladite bascule (40) étant reliée, sensiblement à mi longueur et par un axe transversal (42), à l'extrémité non crantée (35a) du levier cranté (35) de blocage du coulisseau et comportant, à chaque extrémité, des moyens (45) limitant le pivotement vers le haut de cette extrémité, lorsque l'autre extrémité est abaissée par la branche du levier coudé (50) du renvoi.

5. Siège selon la revendication 1, **caractérisé en ce que** chaque manette de commande (153) est montée libre en rotation sur un axe transversal (155) du coulisseau (105) et est soumise en permanence à l'action d'un ressort de torsion (156), tendant à la rabattre sur l'extrémité du coulisseau (105) et dans la glissière (106), tandis que le pied avant (103g) du siège venant dans la zone d'ancrage juxtaposée à la manette (153) comporte un éperon latéral (220) apte, en fin d'engagement, à venir en appui sur l'extrémité active (153d) de la manette pour amener cette manette en position d'utilisation avec son extrémité libre en saillie au-dessus de la glissière (106).

6. Siège selon la revendication 5, **caractérisé en ce que** le coulisseau (105) de la glissière gauche (106) comprend, en allant de l'avant vers l'arrière, l'axe d'ancrage (202) du pied avant (103g), l'articulation (155) de la manette de commande (153), l'articulation (136) du levier cranté (135), dont l'extrémité non crantée est sous l'extrémité active (153d) de ladite manette, une articulation (215) pour un levier complémentaire (214) dont une extrémité fourchue (213) enfourche un doigt transversal (210) porté par la partie crantée du levier (135), et dont l'autre extrémité (214) est près du puits d'ancrage arrière et est apte, lorsque le siège est en position retournée à recevoir l'appui d'un levier (152) solidaire du renvoi de siège, et, enfin, l'axe (202) d'ancrage du pied arrière (104g), tandis que le coulisseau (105) de la glissière de droite (106) comprend, en allant de l'avant vers l'arrière, l'axe d'ancrage (202) du pied avant (103d), l'articulation (136) du levier cranté (135) dont l'extrémité non crantée est apte, lorsque le siège est en position normale, à recevoir l'appui du levier (152) solidaire du renvoi (148) de siège, une articulation (215) pour un levier complémentaire (214) identique en forme, fonction et disposition à celui du coulisseau de gauche, mais dont l'extrémité libre (216) est au-dessous de l'extrémité active (153a) de la manette de commande (153), l'articulation (155) pour cette manette de commande et un axe d'ancrage (202) du pied arrière correspondant (104d).

## Patentansprüche

1. Fahrzeugsitz, der durch Betätigungen an seinen Gleitschienen herausnehmbar, umlegbar und längsverstellbar ist, umfassend vier Füße, die jeweils mit Federriegeln (7, 8, 200, 202) versehen sind und die durch eine manuelle Betätigung entriegelbar sind, wobei diese Riegel geeignet sind, mit komplementären Mitteln (15, 202) zusammenzuwirken, die von Schiebern (5, 105) getragen sind, die in zwei an dem Fahrzeugboden befestigten parallelen Gleitschienen (6, 106) bewegbar sind, wobei jeder dieser Schieber mit Arretiermitteln versehen ist, die durch wenigstens einen Rasthebel (135) gebildet sind, der manuell gelöst werden kann und dessen Rastkerben (137) durch Federmittel mit einer Zahnstange (19, 209) der Gleitschiene im Eingriff sind, **dadurch gekennzeichnet, dass** die Mittel zum manuellen Entriegeln eines jeden Schiebers (5, 105) umfassen:
- einen manuellen Betätigungshebel (53, 153), der in der Nähe der Verankerungszone eines Fußes (3g) an einem der Enden jedes Schiebers (5, 105) angelenkt ist, wobei dieses Ende an den beiden Schiebern (5) für denselben Sitz unterschiedlich ist,
- ein transversales Vorgelege (48, 148), das in der Nähe der vorderen Füße unter dem Sitzkörper des Sitzes (2) angelenkt ist und dessen eines Ende (50, 150) ausgebildet ist, um mit dem Betätigungshebel (53) zum Entriegeln eines der Schieber zusammenzuwirken, während das andere Ende dieses Vorgeleges einen Finger (52, 152) aufweist, der geeignet ist, mit den Mitteln zum Entriegeln des anderen Schiebers (5) in seiner Gleitschiene (6) zusammenzuwirken.

2. Sitz nach Anspruch 1, **dadurch gekennzeichnet, dass** jeder Betätigungshebel (53) frei drehbar an einer transversalen Achse (55) des Schiebers (5) gelagert ist, permanent der Wirkung einer Torsionsfeder (56) unterworfen ist, die bestrebt ist, ihn gegen den zentralen Bereich des Schiebers (5) und in die Gleitschiene (6) umzulegen, und mit der Möglichkeit einer relativen Winkelbewegung im Zuge der Entriegelungsbetätigung mit einer Rastenscheibe (59) drehverbunden ist, deren Rastkerbe (60) geeignet ist, am Ende des manuellen Hochziehens des Hebels mit einem Verriegelungsfinger (67) zusammenzuwirken, der mit Mitteln (64, 65) verbunden ist, die geeignet sind, ihn beim Lösen des Sitzes einzuziehen.

3. Sitz nach Anspruch 2, **dadurch gekennzeichnet**,dassder einziehbare Verriegelungsfinger (67) von dem im wesentlichen horizontalen Abschnitt (64) eines Kniehebels (64), der in der Nähe seiner Krümmung an einer transversalen Achse (66) des Schiebers (5) angelenkt ist und durch eine Feder (68) in die Eingriffsposition seines Fingers in der Rastkerbe (60) der Scheibe (59) zurückgestellt wird, nach oben vorspringt, während der vertikale Abschnitt des Hebels mit einem Einhakmittel für eines der Enden einer Zugfeder (73) versehen ist, und dass dieser Kniehebel neben einer Betätigungsplatine (65) angeordnet ist, die bezogen auf den Hebel (64) begrenzt verschiebbar und begrenzt schwenkbar gelagert ist, wobei die Platine Einhakmittel für das andere Ende der Zugfeder (73) trägt und diesen Einhakmitteln gegenüberliegend einen Detektorfinger (65a) aufweist, der den Eingriffsweg des entsprechenden Fußes (3g) des Sitzes in den komplementären Verankerungsmitteln (15) des Schiebers schneidet, wohingegen der Fuß (3g) des Sitzes eine Vertiefung (76) hat, die bei seinem Eingriff das Ende (65a) des durch seine Feder druckbeaufschlagten Detektorfingers (65) aufnehmen und bei seinem Lösen mit der Abschrägung (74) dieses Fingers zusammenwirken kann, um ihn gegen seine Feder herauszutreiben und ihn zum Schwenken zu veranlassen und dabei die Schwenkbewegung des Kniehebels (64) in die Richtung der Entriegelung des Betätigungshebels (53) herbeizuführen.

4. Sitz nach Anspruch 2, **dadurch gekennzeichnet,dass** das von dem Sitz (2) getragene Vorgelege (48) an seinem für das Zusammenwirken mit einem der beiden Betätigungshebel (53) des Schiebers (5) bestimmten Ende einen Kniehebel aufweist, dessen einer Abschnitt (50b) von dem Hebel (53) beaufschlagt wird und dessen anderer Abschnitt (50a) mit einem der Enden eines Baskülklobens (40) für die Entriegetungsbetätigung des Schiebers (5) zusammenwirkt, wobei der Baskülkloben (40) im wesentlichen auf halber Länge und durch eine transversale Achse (42) mit dem nichtgekerbten Ende (35a) des Rasthebels (35) zum Blockieren des Schiebers verbunden ist und an jedem Ende Mittel (45) aufweist, die die Schwenkbewegung dieses Endes nach oben begrenzen, während das andere Ende durch den Abschnitt des Kniehebels (50) des Vorgeleges niedergedrückt wird.

5. Sitz nach Anspruch 1, **dadurch gekennzeichnet, dass** jeder Betätigungshebel (153) frei drehbar an einer transversalen Achse (155) des Schiebers (105) gelagert ist und permanent der Wirkung einer Torsionsfeder (156) unterworfen ist, die bestrebt ist, ihn auf das Ende des Schiebers (105) und in die Gleitschiene (106) umzulegen, während der vordere Fuß (103g) des Sitzes, der in die Verankerungszone neben dem Hebel (153) gelangt, einen seitlichen Sporn (220) aufweist, der bei Ende des Eingriffs zur Anlage an dem aktiven Ende (153d) des Hebels gelangen kann, um diesen Hebel in die Benutzungsposition zu bringen, in der sein freies Ende über der Gleitschiene (106) freiliegt.

6. Sitz nach Anspruch 5, **dadurch gekennzeichnet, dass** der Schieber (105) der linken Gleitschiene (106) in der Reihenfolge von vorne nach hinten umfasst: die Verankerungsachse (202) des vorderen Fußes (103g), das Gelenk (155) des Betätigungshebels (153), das Gelenk (136) des Rasthebels (135), dessen nichtgekerbtes Ende sich unter dem aktiven Ende (153d) dieses Hebels befindet, ein Gelenk (215) für einen komplementären Hebel (214), von dem ein gegabeltes Ende (213) einen an dem gekerbten Abschnitt des Hebels (135) getragenen transversalen Finger (210) gabelförmig aufnimmt, und dessen anderes Ende (214) sich in der Nähe des hinteren Verankerungsschachtes befindet und geeignet ist für die Beaufschlagung durch einen mit dem Vorgelege des Sitzes fest verbundenen Hebel (152), wenn sich der Sitz in der umgelegten Position befindet, und schließlich die Achse (202) für die Verankerung des hinteren Fußes (104g), während der Schieber (105) der rechten Gleitschiene (106) in der Reihenfolge von vorne nach hinten umfasst: die Verankerungsachse (202) des vorderen Fußes (103d), das Gelenk (136) des Rasthebels (135), dessen nicht gekerbtes Ende geeignet ist für die Beaufschlagung durch den mit dem Vorgelege (148) des Sitzes fest verbundenen Hebel (152), ein Gelenk (215) für einen komplementären Hebel (214), der in seiner Form, Funktion und Anordnung identisch ist mit jenem des linken Schiebers, dessen freies Ende (216) sich jedoch unter dem aktiven Ende (153a) des Betätigungshebels (153) befindet, das Gelenk (155) für diesen Betätigungshebel und eine Verankerungsachse (202) des entsprechenden hinteren Fußes (104d).

## Claims

1. Vehicle seat which can be detached, turned round and longitudinally adjusted, by controls on its runners, and comprises four feet which are each fitted with bolts (7, 8, 200, 202) with springs and can be unbolted by a manual control, the said bolts being capable of cooperating with complementary means (15, 202) carried by slides (5, 105) which are movable in two parallel runners (6, 106) fixed onto the floor of the vehicle, each of the said slides being fitted with locking means constituted by at least one notched lever (135) with manual unlocking whose notches (137) are engaged, by means with springs, in a rack (19, 209) on the runner, **characterised in that** the means for manually unlocking each of the slides (5, 105) comprise:
- a manual control hand-lever (53, 153) articulated on one of the ends of each slide (5, 105), close to the zone for anchoring a foot (3g), the said end being different on the two slides (5) for the same seat,
- and a transverse reversing device (48, 148) which is articulated close to the front feet under the base of the seat (2) and of which one end (50, 150) is arranged to cooperate with the hand-lever (53) for controlling the unlocking of one of the slides, while the other end of the said reversing device carries a finger (52, 152) capable of cooperating with the means for unlocking the other slide (5) in its runner (6).

2. Seat according to claim 1, **characterised in that** each control hand-lever (53) is mounted so as to be free in rotation on a transverse spindle (55) on the slide (5), is permanently subjected to the action of a torsion spring (56) which tends to fold it back against the central part of the slide (5) and into the runner (6), and is linked in rotation, with the possibility of relative angular displacement over the travel for controlling the unlocking, to a notched disc (59) whose notch (60) is capable, after the manual straightening-up of the hand-lever, of cooperating with a bolting finger (67), the said finger being connected to means (64, 65) capable of obscuring it when the seat is disengaged.

3. Seat according to claim 2, **characterised in that** the obscurable bolting finger (67) projects upwards from the substantially horizontal arm (64) of a bent lever (64) which is articulated, close to its bend, on a transverse spindle (66) on the slide (5) and is brought back by a spring (68) into a position in which its finger engages in the notch (60) in the disc (59), whereas the vertical arm of the lever is fitted with a hooking-on means for one of the ends of a traction spring (73); and that the said bent lever is juxtaposed to a control plate (65) mounted with limited sliding and limited pivoting in relation to the lever (64), the said plate carrying hooking-on means for the other end of the traction spring (73) and having, opposite the said hooking-on means, a detecting finger (65a) intersecting the path of engagement of the corresponding seat foot (3g) in the complementary anchoring means (15) of the slide, while the said seat foot (3g) has a groove (76) which is capable, when it is engaged, of receiving the end (65a) of the detecting finger (65) impelled by its spring and, when it is disengaged, of cooperating with the chamfer (74) on the said finger in order to drive it away against its spring and cause it to pivot while bringing about the pivoting of the bent lever (64) for the purpose of unbolting the control hand-lever (53).

4. Seat according to claim 2, **characterised in that** the reversing device (48) carried by the seat (2) has, at its end which is intended to cooperate with one of the two control hand-levers (53) of the slides (5), a bent lever, one of whose arms (50b) is supported by the hand-lever (53) and whose other arm (50a) cooperates with one of the ends of a rocker (40) for controlling the unlocking of the slide (5), the said rocker (40) being connected, substantially in the middle of its length and by a transverse spindle (42), to the non-notched end (35a) of the notched lever (35) for locking the slide and having, at each end, means (45) which limit the upward pivoting of the said end when the other end is lowered by the arm of the bent lever (50) of the reversing device.

5. Seat according to claim 1, **characterised in that** each control hand-lever (153) is mounted so as to be free in rotation on a transverse spindle (155) on the slide (105) and is permanently subjected to the action of a torsion spring (156) which tends to fold it back onto the end of said slide (105) and into the runner (106), while that front foot (103g) of the seat which comes into the anchoring zone juxtaposed to the hand-lever (153) has a lateral spur (220) which is capable, after engagement, of coming to bear on the active end (153d) of the hand-lever in order to bring the said hand-lever into the position of use with its free end projecting above the runner (106).

6. Seat according to claim 5, **characterised in that** the slide (105) of the left-hand runner (106) comprises, from front to back: the spindle (202) for anchoring the front foot (103g); the articulation (155) of the control hand-lever (153); the articulation (136) of the notched lever (135), whose non-notched end is under the active end (153d) of the said hand-lever; an articulation (215) for a complementary lever (214) of which one end (213), which is forked, straddles a transverse finger (210) carried by the notched part of the lever (135), and of which the other end (214) is close to the rear anchoring pit and is capable, when the seat is in the turned-round position, of being supported by a lever (152) integral with the seat reversing device; and finally, the spindle (202) for anchoring the rear foot (104g); while the slide (105) of the right-hand runner (106) comprises, from front to back: the spindle (202) for anchoring the front foot (103d); the articulation (136) of the notched lever (135), whose non-notched end is capable, when the seat is in the normal position, of being supported by the lever (152) integral with the seat-reversing device (148); an articulation (215) for a complementary lever (214) which is identical in shape, function and disposition to that of the left-hand slide but whose free end (216) is below the active end (153a) of the control hand-lever (153); the articulation (155) for the said control hand-lever; and a spindle (202) for anchoring the corresponding rear foot (104d).
